(19)

Europäisches
Patentamt
European
Patent Office
Office européen
des brevets

(11) **EP 1 798 535 A1**

(12) **EUROPEAN PATENT APPLICATION**

(43) Date of publication:
**20.06.2007 Bulletin 2007/25**

(51) Int Cl.:
**G01J 3/433** *(2006.01)*     **G01N 21/39** *(2006.01)*

(21) Application number: **05027550.2**

(22) Date of filing: **15.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventors:
• **Lundqvist, Stefan**
  **43640 Askim (SE)**
• **Thorsén, Per-Arne**
  **433 50 Öjersjö (SE)**

(54) **Wavelength modulation spectroscopy method and system**

(57)    In a wavelength modulation spectroscopy method and system the wavelength of a light source is modulated with a frequency $f_0$. The light of the light source is passed to a sample for interacting and thereafter detected and demodulated at a higher harmonic $Nf_0$. For in-situ gas analysis in rough industrial environments with high dust loads, a fiber optic amplifier is used to boost the laser output power, thus enabling cross-duct or cross-stack measurement without the need of shortening the measurement path.

To suppress non-linearities in the measurement caused by the optical amplifier (32), a portion of the output light (15) from the optical amplifier (32) is passed to a monitor detector (17). The monitor detector output is demodulated at said higher harmonic $Nf_0$, and the modulation of the light source (14) is predistorted at said higher harmonic $Nf_0$ in dependence on said demodulated monitor detector output.

**Description**

The invention relates to a wavelength modulation spectroscopy method. It further relates to a wavelength modulation spectroscopy system.

In rough industrial environments, such as a stack or duct, laser based in-situ gas analysis is impeded by high attenuation of the laser beam due to high dust loads in the measuring atmosphere. An example is the off-gas analysis in electrical arc furnaces which is characterized by high temperatures and high varying dust loads up to 100 $g/m^3$. To lower the laser beam attenuation, the measurement path through the measuring atmosphere can be shortened down to a few hundred millimeters, which, however, requires costly solutions with water cooled purging tubes to protect the transmitter and detector of the laser system from heat, dust and aggressive gases. A short measurement path also reduces the achievable resolution of the gas concentration measurement.

It is therefore known, e.g. from US 2003/0132389 or US 6,949,734, to use a fiber optic amplifier to boost the laser output power, thus enabling cross-duct or cross-stack measurement without the need of shortening the measurement path and the disadvantages associated therewith.

A fiber optic amplifier comprises a length of optical fiber doped with rare-earth ions, most commonly erbium ions used in the C- (1530-1565 nm) and L- (1565-1625 nm) telecommunication bands. Recent developments have extended the wavelength range covered to the 0-band (1260-1360 nm) using praseodymium- and to the S-band (1460-1530 nm) using thulium-doped fiber. In a fiber optic amplifier the doped fiber is optically pumped in order to create a population inversion in the waveguide. The gain of the fiber optic amplifier is dependent on the total number of excited ions in the fiber, the total photon balance and the length of the doped fiber. Therefore the gain is not constant with increasing input power but gain saturation is an important characteristic of a fiber optic amplifier, especially in a booster application. The small signal gain is therefore not linear which severely limits the sensitivity of the gas measurement. Moreover, several components inside the fiber amplifier such as optical isolators and optical couplers will contribute to optical non-linearities further reducing the sensitivity of the gas measurement. This is especially valid for wavelength modulation spectroscopy, as explained in the following.

In wavelength modulation spectroscopy (WMS) the wavelength of a tunable light source, usually a continuously tunable laser such as a diode laser, is modulated by a small amount about an interaction feature of a sample to be measured, for example a molecular absorption line in a gas sample. The modulation frequency is $f_0$. As the light interacts with the sample, for example propagates through a gas sample, wavelength dependent interaction such as absorption converts some of the wavelength modulation into an amplitude modulation of the light. Thus, the light will have an overtone spectrum generated by the interaction process, the harmonic content of the spectrum being dependent on the interaction feature, for example the width and shape of the molecular absorption line in the gas and the etalons in the system. When the light impinges onto a detector, for example a photodiode, the detector output contains AC components at the modulation frequency $f_0$ and its higher harmonics $Nf_0$ (N = 2, 3, 4, etc.). Demodulating the detector output at one of said higher harmonics $Nf_0$ shifts the measurement from frequencies near DC, where the light source is noisy, into a higher frequency range, where the noise is lower, thus improving the measurement sensitivity.

The sensitivity obtained in tunable diode laser spectroscopy is mainly limited by deterministic noise whereas random noise such as shot noise and flicker (1/f) noise is several orders of magnitude lower. The deterministic noise has its source of origin in non-linearities of the laser and the coupling between the laser and fiber and in other optical components, such as the optical amplifier. As the gain of the optical amplifier is not constant with increasing input power, the amplitude modulation at the optical amplifier input will lead to gain fluctuations at the modulation frequency resulting in the creation of unwanted harmonics. Thus, the interference phenomena introduced by the deterministic noise are manifested as optical wavelength selective fading causing generation of $Nf_0$ harmonics similar to the ones caused by the wavelength dependent interaction of the sample to be measured.

US 2003/0132389 discloses a method for monitoring the high temperature reducing atmosphere in a combustion process by means of a wavelength tunable diode laser. An erbium-doped fiber amplifier (EDFA) is coupled to the laser to amplify the laser beam which is transmitted through the process atmosphere to a detector. The optical power of the laser beam is controlled by monitoring the optical power received by the detector and regulating the power of the pump laser of the EDFA in a closed loop. However, there is not any provision to monitor the linearity of the EDFA in order to compensate for distortion generated by the EDFA at the detection frequency $Nf_0$.

In US 6,949,734 a sensing system for sensing a characteristic of a sample is disclosed. The light of a wavelength tunable source and the light of a reference source are combined by an optical coupler into a combined signal which is then passed through an optical amplifier. The amplified combined signal is detected by two detectors before and after interaction with the sample. Since the light of the wavelength tunable source and the light of the reference source are combined they will experience the same optical aspects of the system. This information is then used to subtract any common mode signal perturbations from the analytical signal detected from the tunable source after passing the sample. The reference source is kept away from the spectral feature of the sample, which results in incomplete and insufficient compensation of common mode noise due to the spectral properties of the optical components, including the optical amplifier, in the path. Most prominent, the etalon noise in the measurement path will not be reduced since this will be totally uncorrelated between the two light sources. Moreover, the second harmonic components generated in the optical amplifier will be modulated by any perturbations in the optical path. This effect can not be compensated by a subtraction at the receiver end but will further reduce the sensitivity of the disclosed system.

From US 2004/0223158 a wavelength modulation spectroscopy method is known in which non-linearities in the modulation of the wavelength of the light source are suppressed by detecting the light before interaction with the sample at the $Nf_0$ harmonic and, in dependence thereon, actively predistorting the modulation input of the light source at said $Nf_0$ harmonic. This will linearize the light source with respect to its output, including the light source as such, for example a diode laser, and any other optical component, for example optical coupling and fiber, between the light source and the monitor detector.

The present invention advantageously recognizes the value of this known method for linearizing the optical amplifier in a wavelength modulation spectroscopy system with respect to its output and thus provides a method as defined in claim 1 and a system as defined in claim 6.

Preferred embodiments of the method and the system according to the invention are specified in the remaining claims.

The invention enables the use of an optical amplifier, in particular a fiber optic amplifier (e.g. an EDFA) in a fiber coupled wavelength modulation spectroscopy system by linearizing the laser-amplifier source assembly using selective predistortion. This enables high sensitivity gas analysis even at very high level of optical attenuation. By including the fiber optic amplifier in a linearization loop utilizing selective predistortion at the detection frequency a highly linear laser-fiber amplifier combination is created.

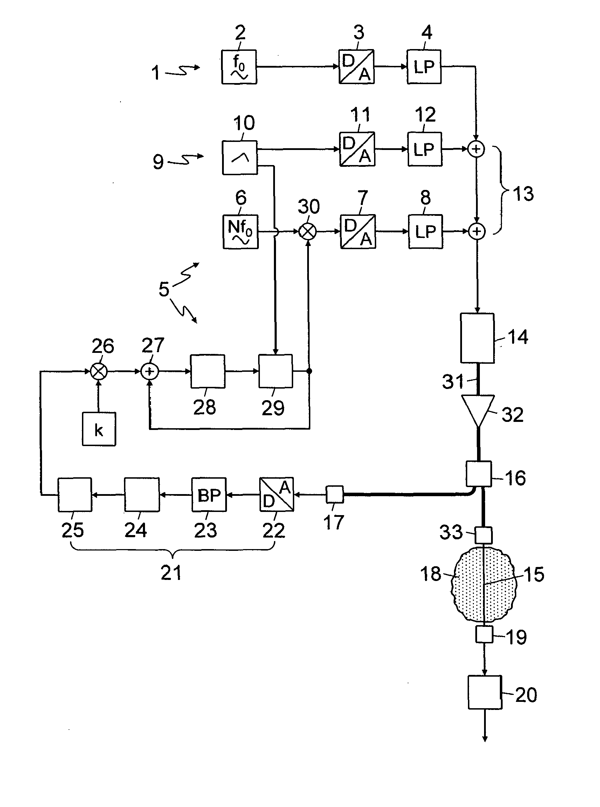

The invention will be now described by way of a preferred example and with reference to the only figure of the drawing.

In a first modulation means 1 a digital waveform generator 2 generates a bit stream representing a sinusoidal signal at a frequency $f_0$. The bit stream is converted by a digital-to-analog converter 3 and after that filtered by a low-pass filter 4.

In a second modulation means 5 a second digital waveform generator 6 provides a bit stream representing a sinusoidal signal at a frequency $Nf_0$, which signal is fed via a multiplying means 30 to a digital-to-analog converter 7 and after that to a low-pass filter 8.

In a third modulation means 9 a third digital waveform generator 10 provides a bit stream representing a slow sweep function, which may be part-wise linear in time or of an arbitrary shape. It also generates an address domain defining the range for this slow sweep function. The bit stream is converted to analog form by a digital-to-analog converter 11 and after that filtered by a low-pass filter 12.

The analog signals of said first, second and third modulation means 1, 5, 9 are summed in adding means 13 and fed to a modulation input of a wavelength tunable light source 14 in form of a diode laser.

The light of the light source 14 is coupled via optical fiber 31 to an optical amplifier 32 comprising a rare-earth doped optical fiber and then split by means of a beam splitter 16 in one portion to a monitor detector 17 and another portion to a collimating optics 33 to bring the transmitted light to a parallel beam 15 for interacting with a sample 18. According to the slow sweep function of the third digital waveform generator 10 the wavelength of the light 15 sweeps over an interaction feature of the sample 18. Here, a molecular absorption line of interest of a gas sample 18 is scanned. Due to the wavelength dependent absorption the light 15 will have an overtone spectrum, the harmonic content of the spectrum being dependent on the width and shape of the molecular absorption line. After passing the gas sample 18 the light 15 impinges onto a detector 19. The detector output, which contains AC components at the modulation frequency $f_0$ and its higher harmonics $2f_0$, $3f_0$, $4f_0$, etc., is demodulated in first demodulation means 20 at the above mentioned higher harmonic $Nf_0$, which shifts the measurement from frequencies near DC, where the light source 14 is noisy, into a higher frequency range, where the noise is lower, thus improving the measurement sensitivity.

The output from the monitor detector 17 is fed to a second demodulation means 21 comprising an analog-to-digital converter 22, a band-pass filter 23, a lock-in amplifier 24 and a phase adjusting means 25 for successively digitizing the monitor detector output, then band-pass filtering the digitized monitor detector output with an $Nf_0$ center frequency in order to eliminate any residual amplitude modulation at $f_0$, converting it to base band and then phase adjusting the band-pass filter output.

The phase adjusted lock-in amplifier output is fed to a multiplying means 26 for multiplying with a constant k and then via adding means 27 and a FIR (finite impulse response) low-pass filter 28 to a storage means 29. The storage means 29 comprises a look-up table containing a given number M of values $L_m$ (m = 1, ..., M), which are allocated to and selectable by the same number of different values or positions of the sweep function of the third waveform generator 10. The FIR low-pass filter 28 provides spatial stability by preventing adjacent values in the storage means 29 to grow too far apart.

In the multiplying means 30 the sinusoidal $Nf_0$ signal provided by the second digital waveform generator 6 is multiplied with the output of the storage means 29, i.e. with the stored value assigned to the current position of the sweep function. Thus, the modulation of the light source 14 is predistorted at each position of the sweep with the frequency $Nf_0$ and with an individual amount. By feeding back the output of the storage means 29 to the adding means 27 a fraction k of the demodulated monitor detector output $x_{m,u}$ at the current position m of the sweep function for the current sweep period u is added to the previous value $L_{m,u-1}$ in the storage means 29 and thus an integrator is established with k being the integration constant.

$$L_{m,u} = L_{m,u-1} + k \cdot x_{m,u} \qquad\qquad \text{(Equation 1)}$$

The overall power gain of the fiber optic amplifier 32 in the saturation regime can be written as

$$
\begin{aligned}
G(\lambda, P_{L_{Nxf_0}}(\nu_m), P_{SAT}) &= \frac{P_{OUT_{Nxf_0}}(\nu_m)}{P_{L_{Nxf_0}}(\nu_m)} = G_0 \cdot \exp\left( -\frac{G-1}{G} \frac{P_{OUT_{Nxf_0}}(\nu_m)}{P_{SAT}} \right) \\
&= G_0 \cdot \exp\left( \frac{P_{L_{Nxf_0}}(\nu_m) - P_{OUT_{Nxf_0}}(\nu_m)}{P_{SAT}} \right)
\end{aligned}
$$

$$\text{(Equation 2)},$$

where $P_{L_{Nxf_0}}(\nu_m)$ is the laser optical output power at the optical frequency $\nu_m$, which frequency $\nu_m$ depends on the current position m of the sweep function. The output power of the diode laser 14 contains an amplitude modulated component at $f_0$ and an overtone component at $Nf_0$ if the laser characteristic is not linear. $P_{OUT_{Nxf0}}(\nu_m)$ is the optical amplifier output power, $G_0$ is the unsaturated gain of the fiber optic amplifier 32 and $P_{SAT}$ is the amplifier saturation power, i.e. the power at which the gain has rolled off by 3 dB.

The amplitude modulation at the input will lead to gain fluctuations in the fiber optic amplifier 32 at the modulation frequency resulting in the creation of unwanted harmonics. This means that even if the laser diode 14 was perfectly linear, the output from the optical amplifier would contain unwanted signal components at the detection frequency $Nf_0$.

In the following let $P_{D_{Nxf0}}(\nu_m)$ represent the distortion power to be compensated and $P_{M_{Nxf0}}(\nu_m)$ the modulation power applied to the wavelength tunable light source 14 for compensation, in both cases around $Nf_0$ for the optical frequency $\nu_m$.

From

$$P_{OUT_{Nxf_0}}(\nu_m) = P_{D_{Nxf_0}}(\nu_m) + P_{M_{Nxf_0}}(\nu_m) \qquad\qquad \text{(Equation 3)}$$

and

$$P_{M_{Nxf_0}}(\nu_m) = -\frac{1}{s} C_A \cdot k \cdot P_{OUT_{Nxf_0}}(\nu_m) \qquad\qquad \text{(Equation 4)}$$

one obtains

$$P_{OUT_{Nxf_0}}(\nu_m) = \frac{\dfrac{s}{C_A \cdot k} \cdot P_{D_{Nxf_0}}(\nu_m)}{1 + \dfrac{s}{C_A \cdot k}}$$  (Equation 5).

In the expressions above, s is the Laplace operator, 1/s represents integration in the storage means 29 (formally this should be a time discrete expression, but since the input has a very low bandwidth due to the quasi-stationary characteristics of the optical phenomena, the time continuous approximation is valid) and $C_A$ is an instrumentation constant representing analogue gain and scaling within the signal processing chain.

Equation 5 is an expression for a first order high-pass filter where the bandwidth equals the product $C_A \cdot k$. This means that $Nf_0$ distortion components for any optical frequency varying at a lower rate than this bandwidth will be attenuated according to this filter's response.

Effectively, the system comprises M such control loops where M represents the number of positions in the storage means 29.

It should be understood that the diode laser 14 and the fiber optic amplifier can be included in a single unit.

It would be possible to use active feedback or gain clamping to stabilize the gain of the fiber optic amplifier 32. The feedback is then applied to the internal pump laser of the optical amplifier. This technique, however, would not correct for all the spurious harmonics generated by the amplifier, because there are contributions from isolators, couplers and fiber splices.

The main advantages realized by this invention are:

The nonlinear gain characteristic of the optical amplifier is compensated by the application of a compensating predistortion signal at the amplifier input. The linearizing scheme will also include the effects of optical interferences from other components in the amplifier.

The technique enables the use of an optical amplifier in high sensitivity WMS in-situ measurements thereby extending this measurement technique into applications with high dust load, such as in the metallurgical industry.

Unwanted signal components generated by the transfer function of the optical amplifier are removed before the light enters the gas to be analyzed. The compensation of the baseline variations is therefore not dependent on the transmission in the measurement channel.

The removal of distortions at $Nf_0$ prevents rapid transmission fluctuations to be interpreted as molecular absorption.

The invention is easy to implement in existing technology using well-known standard digital signal processing methods. For example, all digital processing can be performed in an ASIC (application specific integrated circuit), DSP (digital signal processor) or FPGA (field programmable gate array).

The low bandwidth of the method makes it suitable for implementation in the digital domain, allowing intelligent control of the linearization mechanism. Parameter changes for adoption to different components and operating conditions may therefore easily be implemented and put under software control. Artifact non-linearities and line-shapes may also straightforwardly be inserted for production testing and/or component characterization purposes.

**Claims**

**1.** A wavelength modulation spectroscopy method comprising the steps of:

- modulating the wavelength of a light source (14) with a frequency ($f_0$),
- passing the light (15) of the light source (14) to an optical amplifier (32),
- passing a portion of the output light (15) from the optical amplifier (32) to a sample (18) for interacting and thereafter to a measuring detector (19),
- demodulating the measuring detector output at a higher harmonic ($Nf_0$) of said frequency ($f_0$),
- passing another portion of the light (15) from the optical amplifier (32) to a monitor detector (17),
- demodulating the monitor detector output at said higher harmonic ($Nf_0$) of said frequency ($f_0$) and
- further modulating the light source (14) with said higher harmonic ($Nf_0$), the modulation intensity being dependent on said demodulated monitor detector output.

**2.** The method of claim 1, wherein the dependence comprises an integration of said demodulated monitor detector

3. The method of claim 2, wherein the step of further modulating the light source (14) with said higher harmonic ($Nf_0$) in dependence on said monitor detector output comprises:

   - adding the demodulated monitor detector output or a fraction thereof to a value stored in a storage means (29) and
   - multiplying said higher harmonic ($Nf_0$) with said updated value.

4. The method of one of the preceding claims further comprising the steps of:

   - periodically sweeping the wavelength of said light source (14) over an interaction feature of the sample (18) according to a sweep function and
   - modulating the light source (14) with said higher harmonic ($Nf_0$) in further dependence on the current value of said sweep function.

5. The method of claim 4 in combination with claim 3, wherein the storage means (29) contains a given number of values, which are allocated to the same number of different values of the sweep function and
   wherein each of the values in the storage means (29) is selected for updating in dependence on the current value of the sweep function.

6. A wavelength modulation spectroscopy system comprising:

   - a wavelength tunable light source (14),
   - first modulation means (1) for modulating the wavelength of said light source (14) with a frequency ($f_0$),
   - an optical amplifier (32) for amplifying the light (15) of the light source (14),
   - a measuring detector (19) for detecting a portion of the output light (15) from the optical amplifier (32) after interaction with a sample (18) and producing a measuring detector output,
   - first demodulation means (20) for demodulating the measuring detector output at a higher harmonic ($Nf_0$) of said frequency ($f_0$),
   - a monitor detector (17) for detecting another portion of the output light (15) from the optical amplifier (32) and producing a monitor detector output,
   - second demodulation means (21) for demodulating the monitor detector output at said higher harmonic ($Nf_0$) of said frequency ($f_0$) and
   - second modulation means (5) for further modulating said light source (14) with said higher harmonic ($Nf_0$), the modulation intensity being dependent on said demodulated monitor detector output.

7. The system of claim 6, wherein the second modulation (5) means comprises:

   - integrator means for integrating said demodulated monitor detector output.

8. The system of claim 7, wherein said integrator means comprises:

   - storage means (29) containing a value,
   - adding means (27) for updating said stored value by adding the demodulated monitor detector output or a fraction thereof and
   - multiplying means (30) for multiplying said higher harmonic ($Nf_0$) with said updated value.

9. The system of one of claims 6 to 8 further comprising:

   third modulation means (9) for periodically sweeping the wavelength of said light source (14) over an interaction feature of the sample (18) according to a sweep function, and wherein the second modulation means (9) comprises means for modulating the wavelength of the light source (14) with said higher harmonic ($Nf_0$) in further dependence on the current position of the sweep function.

10. The system of claim 9 in combination with claim 8, wherein the storage means (29) contains a given number of values, which are allocated to the same number of different positions of the sweep function and
    wherein the second modulation means (9) further comprises selecting means for selecting each of the values in the storage means (29) in dependence on the current position of the sweep function, the selected value to be updated.

11. The system of one of claims 6 to 10, wherein the optical amplifier (32) is a rare-earth doped optical fiber amplifier.

**European Patent Office**

## EUROPEAN SEARCH REPORT

Application Number

EP 05 02 7550

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | EP 1 475 618 A (SIEMENS AKTIENGESELLSCHAFT) 10 November 2004 (2004-11-10) * abstract; figure * * paragraphs [0008], [0010] - [0028] * ----- | 1-11 | INV. G01J3/433 G01N21/39 |
| A | EP 1 491 877 A (ITT MANUFACTURING ENTERPRISES, INC) 29 December 2004 (2004-12-29) * abstract; figure 1 * * paragraphs [0009], [0021] - [0023], [0032], [0069] * ----- | 1-11 | |
| | | | **TECHNICAL FIELDS SEARCHED (IPC)** G01J G01N |

The present search report has been drawn up for all claims

| Place of search | Date of completion of the search | Examiner |
|---|---|---|
| Munich | 15 May 2006 | Varelas, D |

EPO FORM 1503 03.82 (P04C01)

**ANNEX TO THE EUROPEAN SEARCH REPORT
ON EUROPEAN PATENT APPLICATION NO.**                    EP 05 02 7550

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2006

| Patent document cited in search report | | Publication date | Patent family member(s) | | Publication date |
|---|---|---|---|---|---|
| EP 1475618 | A | 10-11-2004 | US | 2004223158 A1 | 11-11-2004 |
| EP 1491877 | A | 29-12-2004 | US | 2004263851 A1 | 30-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030132389 A
- US 6949734 B
- US 6949734 A
- US 20040223158 A